# EUROPÄISCHE PATENTSCHRIFT

(11) **EP 1 278 994 B1**
(45) Veröffentlichungstag und Bekanntmachung des Hinweises auf die Patenterteilung: **18.10.2006**
(21) Anmeldenummer: 01911603.7
(22) Anmeldetag: 06.02.2001
(51) Int. Cl.: F24F 7/013, F24F 13/28, B01D 46/02

(54) **LÜFTUNGSVORRICHTUNG**
VENTILATION DEVICE
DISPOSITIF DE VENTILATION

(30) Priorität: 02.05.2000 DE 10021024
(43) Veröffentlichungstag der Anmeldung: 29.01.2003
(73) Patentinhaber: SIEGENIA-AUBI KG, 57234 Wilnsdorf (DE)
(72) Erfinder: KRINGE, Nicole, 57250 Netphen (DE); KUCHARCZYK, Eckhard, 57234 Wilnsdorf (DE)
(86) Internationale Anmeldenummer: PCT/EP2001/001256
(87) Internationale Veröffentlichungsnummer: WO 2001/098715

(56) Entgegenhaltungen:
- EP-A- 0 149 053
- EP-A- 0 352 113
- PATENT ABSTRACTS OF JAPAN vol. 1997, no. 01, 31. Januar 1997 (1997-01-31) -& JP 08 226686 A (FUJI KOGYO KK), 3. September 1996 (1996-09-03)
- PATENT ABSTRACTS OF JAPAN vol. 1997, no. 04, 30. April 1997 (1997-04-30) -& JP 08 323125 A (ACE KOKI KK), 10. Dezember 1996 (1996-12-10)
- PATENT ABSTRACTS OF JAPAN vol. 014, no. 121 (M-0946), 7. März 1990 (1990-03-07) -& JP 01 318836 A (MATSUSHITA SEIKO CO LTD), 25. Dezember 1989 (1989-12-25)

## Beschreibung

Gegenstand der Erfindung ist eine Lüftungsvorrichtung nach dem Oberbegriff des Anspruchs 1.

Eine derartige Lüftungsvorrichtung ist bereits durch die EP 0 536 132 B1 bekannt geworden. Die Lüftungsvorrichtung weist ein quaderförmiges Gehäuse auf, welches ein Radialgebläse sowie Luftleitelemente in sich aufnimmt. Das Radialgebläse ist an der Rückwand des Gehäuses befestigt und weist mit seinem Laufrad zu einer Öffnung im Deckel des Gehäuses. Um das Laufrad herum ist ein ringförmiges Filterelement vorgesehen.

Nachteilig ist es dabei, dass das Filterelement aus einem formstabilen Filterwerkstoff vergleichsweise genau an die Abmessungen des Gehäuses und des Laufrades anzupassen ist. Ansonsten könnte bei einem nicht formstabilen Filterwerkstoff das Filterelement mit dem Laufrad in Verbindung gelangen. Die genaue Fertigung der Filterelemente ist jedoch nur bei großen Stückzahlen wirtschaftlich möglich.

Aus der EP 0 149 053 B1 ist eine Lüftungsvorrichtung bekannt geworden, die eine Montage an einer Wand eines Gebäudes zulässt. Das quaderförmige Gehäuse weist eine Gehäuserückwand auf, in der eine Zuluftöffnung vorgesehen ist. In Achsfluchtrichtung dazu ist ein Radialgebläse vorgesehen, welches mit seinem Stator an einer Halteplatte innerhalb des Gehäuses befestigt ist. In dem Gehäuse ist femer eine Ummantelungsspirale vorgesehen, die in einen zentralen Lüftungskanal mündet. Der Lüftungskanal verzweigt in zwei querverlaufende Lüftungskanäle, die in seitlich an dem Gehäuse angebrachte Luftaustritte münden. In dem zentralen Lüftungskanal ist ein Filterelement vorgesehen, welches U-förmig gebogen in der Verzweigung zu den Lüftungskanälen angeordnet ist.

Die Anordnung des Filterelementes beansprucht dabei einigen Bauraum des Gehäuses und bewirkt auch einen Druckverlust.

Aufgabe der Erfindung ist es daher, eine Lüftungsvorrichtung zu schaffen, die eine kostengünstige Herstellung eines Filterelementes ermöglicht, ohne das dabei die Nachteile des Standes der Technik auftreten.

Die Lösung dieser Aufgabe besteht in einer Lüftungsvorrichtung nach dem Oberbegriff nach Anspruch 1 in der Weiterbildung mit den Merkmalen des kennzeichnende Teils.

Durch die neuerungsgemäße Lüftungsvorrichtung wird eine Drei-Punkt-Befestigung des Filterelementes möglich, die sowohl bei formstabilen wie instabilen Filterelementen verwendbar ist. Bei instabilen Filterwerkstoffen, die also keine formstabilen Filterelemente zulassen und im wesentlichen biegeschlaff in entsprechenden Halterungen aufgenommen werden müssen, wird die vorteilhafte kreisförmige Anordnung um das Radialgebläse möglich. Es hat sich nämlich gezeigt, dass die kreisförmige Anordnung des Filterelementes um das Radialgebläse einen vergleichsweise nur geringen Druckverlust verursacht, da die erzielbare Oberfläche des Filterelementes im Verhältnis zu dessen Bauraum groß ist. Gleichzeitig wird durch die Anordnung eine Schalldämmung sowohl des von der Gebäudeaußenseite in das Gehäuse eindringenden als auch des durch das Radialgebläse selbst verursachten Schalls bewirkt.

Dabei wird ausgenutzt, dass die Filterelemente durch das Einspannen in dem Halter und dem gegenüberliegenden Gegenhalter eine wenn auch nur geringfügige Eigenspannung erhält, die auch einen an sich biegeschlaffen Körper in der gewünschten Position hält. Das Auswechseln des Filterelementes wird dadurch ebenfalls vereinfacht, da das Filterelement nur an einem Längsende aus dem Halter herausgenommen werden muss, um die durch die Lagerung bestehende Eigenspannung aufzuheben. Das Filterelement ist wieder biegeschlaff und lässt sich einfach entfernen.

Eine weitere vorteilhafte Ausgestaltungen der Lüftungsvorrichtung ist dadurch gekennzeichnet, dass der Halter als H-förmiges Profil ausgebildet ist und lotrecht unterhalb des Radialgebläses liegt. Das H-förmige Profil erlaubt die Lagerung der Längsenden des Filterelementes in einem einzigen Bauteil und bedingt durch die Lage unter Ausnutzung der Schwerkraft.

Ferner ist eine Ausgestaltung vorteilhaft, bei der das Radialgebläse von einem zylindrischen Käfig umgeben ist, an dem das Filterelement außenseitig anliegt. Der Käfig dient dabei einerseits als Halterung für das Filterelement und andererseits zum Aufbau einer kontrollierten Strömung durch das Filterelement. Durch den Käfig wird ein gleichmäßiger Druckaufbau vor dem Filterelement begünstigt, der eine gleichmäßigere Durchströmung des Filterelementes bewirkt.

Daher hat es sich auch bewährt, dass der Käfig aus einem gelochten Blech- oder Kunststoffabschnitt besteht, der kreisförmig gebogen in einer Nut des Gehäuses aufgenommen wird. Die Lochung kann dabei z.B. kreis- oder wabenförmig sein. Durch den so geschaffenen Käfig lässt sich ein Öffnungs/Sperrverhältnis von etwa 25:75% erzielen, welches sich für die gleichmäßigere Durchströmung senkrecht zum Filterelement als besonderst vorteilhaft erwiesen hat. Gleichzeitig wird eine quergerichtete tangentiale Strömung verhindert und der Reibungswiderstand des Laufrades reduziert, da die Innenseite vergleichsweise glatt ausgebildet ist. Durch die Befestigung in dem Gehäuse innerhalb der Nut kann der Blech- oder Kunststoffabschnitt aus ebenem rechteckigem Material, z.B. durch Stanzen, hergestellt werden. Die endgültige Form wird durch die in dem Gehäuse vorgesehene Nut herbeigeführt, die dem Blech- oder Kunststoffabschnitt seine Form und gleichzeitig damit die notwendig Stabilität verleiht.

Dabei ist nach einer Weiterbildung auch vorgesehen, dass der Käfig koaxial zu einer Zuluftöffnung im Gehäuse verläuft und an seinem freien Ende eine Platte trägt, an der das Radialgebläse befestigt ist. Dies vereinfacht den gesamten Aufbau der Lüftungsvorrichtung, da das Radialgebläse durch diese Befestigung in dem Gehäuse vorragt und keine weiteren Befestigungselemente notwendig werden. Da das Radialgebläse darüber hinaus nicht unmittelbar mit dem Gehäuse verbunden ist, kann dadurch auch die Übertragung von Körperschall gemindert werden. Dabei liegt die Platte der Zuluftöffnung des Gehäuses gegenüber, so dass von der Gebäudeaußenseite eintretender Schall von der Platte reflektiert bzw. gestreut werden kann. Dabei hat die Platte insbesondere durch den daran befestigten Stator des Radialgebläses eine erheblich größere Masse und kann daher schwerer durch Schall in Schwingungen versetzt werden. Die Platte stabilisiert den Käfig zusätzlich, der so neben der Aufnahme in der Nut des Gehäuses auch an dem freien Ende in der gewünschten Form gehalten wird.

Wenn der Gegenhalter im wesentlichen als V-förmiger Gehäuseabschnitt zwei Luftführungskanäle ausbildet, kann die Luftführung innerhalb des Gehäuses ohne zusätzliche Maßnahmen erfolgen. Dabei kann der Gegenhalter wahlweise ein Teil des Gehäuses sein oder aber als zusätzliches Bauteil in dem Gehäuse befestigt werden.

Alternativ dazu kann jedoch auch vorgesehen werden, dass der Gegenhalter durch ein in das Gehäuse einsteckbaren, V-förmig konturierten Dämmstoffkörper gebildet wird. Die eintretenden Schallwellen werden dadurch absorbiert und nicht zur Gebäudeinnenseite geführt.

Eine besonders bevorzugte Ausgestaltung sieht vor, dass das Filterelement als Aktivkohlefilter ausgelegt ist, der aus verschäumtem Aktivkohlegranulat besteht, das in einem Sack aus luftdurchlässigem Vlies aufgenommen ist. Der Einsatz von Aktivkohlefiltern ist ebenso wie deren Vorteile im wesentlichen bekannt. Die besondere Ausgestaltung lässt eine Herstellung eines preiswerten aber effektiven Filterelementes zu. Durch das Vlies wird ein Rieselschutz bewirkt, der sich ggf. nach einem Zeitablauf oder durch mechanische Belastung lösende Bestandteile zurückhält. Diese könnten sich ansonsten in dem Gehäuse ansammeln oder in das Laufrad des Radialgebläses gelangen. Gleichzeitig hat das so gestaltete Filterelement trotz des geringen Druckverlustes zusätzlich eine hohe schalldämmende Wirkung.

Selbstverständlich ist auch eine Ausgestaltung möglich, bei der das Filterelement in bekannter Weise als Filtervlies ausgelegt ist. Diese Filterelemente sind kostengünstiger als die Aktivkohlefilter und daher einzusetzen, wenn keine Anwendung der Aktivkohlefilter notwendig wird.

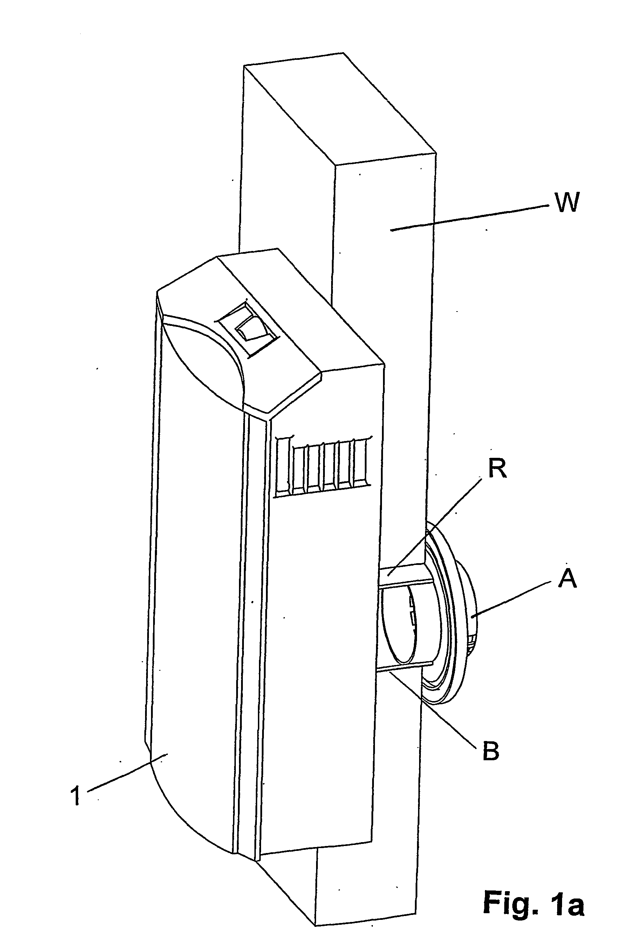

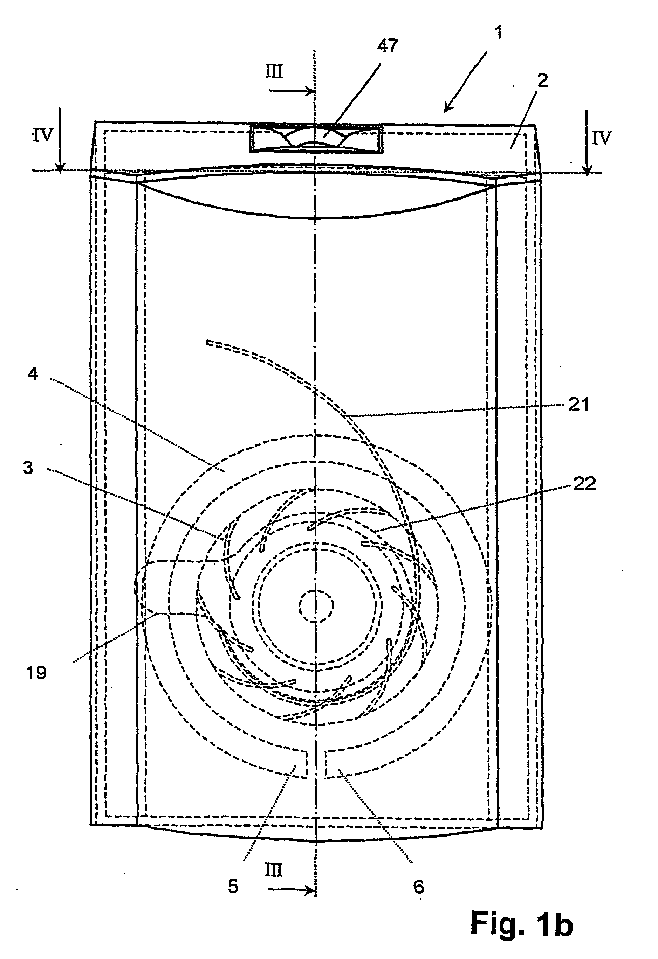

Ein Ausführungsbeispiel der Erfindung ist in der Zeichnung dargestellt und wird im folgenden näher beschrieben. Es zeigt
- Fig. 1 a: eine Anordnung der Lüftungsvorrichtung an einer teilweise dargestellten Gebäudewand,
- Fig. 1 b: eine Vorderansicht einer Lüftungsvorrichtung, bei der verdeckte Bauteile teilweise dargestellt sind mit einer in Verschlusslage befindlichen Klappe,
- Fig. 2: eine Ansicht nach Fig. 1 b mit Darstellung der Lüftungswege und geöffneter Lüftungsklappe,
- Fig. 3: einen Längsschnitt entlang der Linie III-III in Fig. 1 b,
- Fig. 4: einen Querschnitt entlang der Linie IV-IV in Fig. 1 b,
- Fig. 5: die Lüftungsvorrichtung nach Fig. 1 b und 2 bei geöffnetem Gehäuse und ohne Bodenblech,
- Fig. 6: das Bodenblech mit geöffneter Klappe und dem angedeuteten Stator des Radialgebläses,
- Fig. 7: einen Längsschnitt durch die Lüftungsvorrichtung im Bereich seitlicher Schieberöffnungen in Verschlussstellung der Schieber,
- Fig. 8: den Schnitt nach Fig. 7 in Öffnungsstellung,
- Fig. 9: eine Draufsicht auf die Führung der Schieber nach Fig. 7 oder 8, und
- Fig. 10: einen Schieber in vergrößertem Maßstab.

Fig. 1 a zeigt eine Lüftungsvorrichtung 1, die an einer - teilweise geschnitten dargestellten - Wand W befestigt ist. In der Wand W ist eine Bohrung B vorgesehen, in der eine Rohrauskleidung R aufgenommen ist. An der Gebäudeaußenseite ist die Rohrauskleidung R mit einem Wetterschutz A versehen, der ein Eindringen von Regenwasser oder Insekten verhindert.

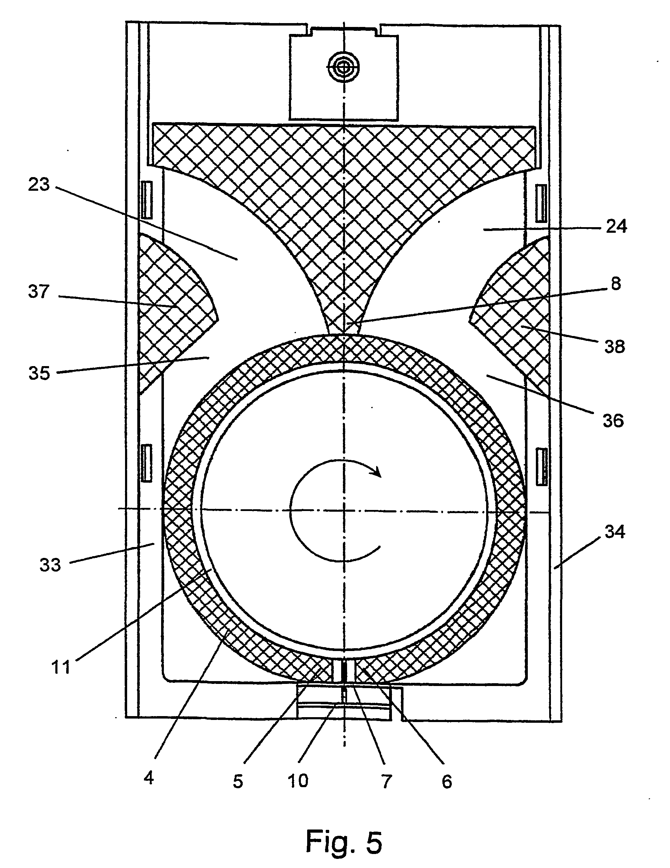

Fig. 1b bis 4 ist eine Lüftungsvorrichtung 1 für Räume eines Gebäudes dargestellt. Die Lüftungsvorrichtung 1 wird an oder in einer hier nicht dargestellten Wand des Gebäudes befestigt und weist ein Gehäuse 2 auf, welches zumindest einen später erläuterten Luftführungskanal ausbildet. Wie in der Fig. 1b dargestellt, ist in dem Gehäuse 2 ein Radialgebläse 3 sowie ein Filterelement 4 angeordnet, wobei das Filterelement 4 das Radialgebläse 3 annähernd ringförmig umgreift. Das Filterelement 4 besteht aus einer verformbaren - biegeschlaffen - rechteckigen Matte, dessen Längsenden 5, 6 in einem Halter 7 aufgenommen ist. Dem Halter 7 liegt diametral zur Achse des Radialgebläses 3 ein Gegenhalter 8 gegenüber, wie in Fig. 5 sichtbar.

Halter 7 und Gegenhalter 8 bilden eine Drei-Punkt-Befestigung des Filterelementes 4, die sowohl bei formstabilen wie instabilen Filterelementen 4 verwendbar ist. Bei instabilen Filterwerkstoffen, die also keine formstabilen Filterelemente zulassen und im wesentlichen biegeschlaff in entsprechenden Halterungen aufgenommen werden müssen, wird die vorteilhafte kreisförmige Anordnung um das Radialgebläse 3 möglich. Die kreisförmige Anordnung des Filterelementes 4 um das Radialgebläse 3 verursacht einen vergleichsweise nur geringen Druckverlust durch den Filter, da die erzielbare Oberfläche des Filterelementes 4 im Verhältnis zu dessen Bauraum groß ist. Durch diese Anordnung wird eine Schalldämmung sowohl des von der Gebäudeaußenseite in das Gehäuse 2 eindringenden, als auch des durch das Radialgebläse 3 selbst verursachten Schalls bewirkt und gleichzeitig eine raumsparende Anordnung des Filterelementes 4 getroffen.

Das Filterelement 4 erhält durch das Einspannen in dem Halter 7 und dem gegenüberliegenden Gegenhalter 8 eine wenn auch nur geringfügige Eigenspannung, die einen an sich biegeschlaffen Körper wie das Filterelement 4 in der gewünschten Position hält. Das Auswechseln des Filterelementes 4 wird dadurch ebenfalls vereinfacht, da das Filterelement 4 nur an einem Längsende 5 oder 6 aus dem Halter 7 herausgenommen werden muss, um die durch die Lagerung hervorgerufene Eigenspannung aufzuheben. Das Filterelement 4 ist wieder biegeschlaff und lässt sich bedingt durch die einfache Verformbarkeit problemlos entfemen.

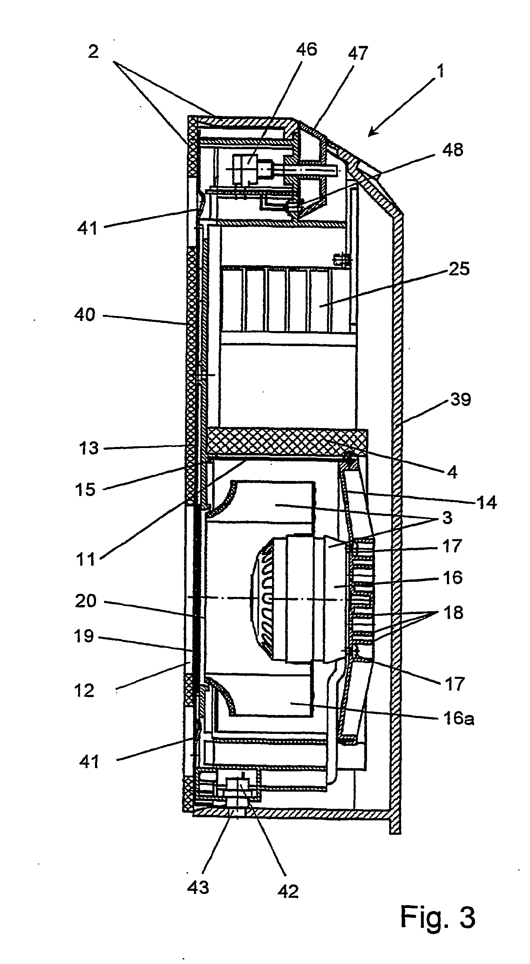

Der Halter 7 ist als H-förmiges Profil 10 ausgebildet, welches mit seiner Längsmittelachse fluchtend mit der Achse des Radialgebläses 3 ausgerichtet ist und lotrecht unterhalb desselben liegt. Das H-förmige Profil 10 erlaubt die Lagerung der Längsenden 5,6 des Filterelementes 4 in einem einzigen Bauteil und - bedingt durch die Lage - unter Ausnutzung der Schwerkraft. Das H-förmige Profil 10 ist dabei an seinem oberen Ende der Kreisbogen-Kontur eines zylindrischen Käfigs 11 angepasst, der koaxial zu einer Zuluftöffnung 12 in einem Bodenblech 13 des Gehäuses 2 und der Achse des Radialgebläses 3 verläuft und an seinem freien, zum Rauminneren weisenden Ende eine Platte 14 trägt, an der der Stator 16 des Radialgebläses 3 befestigt ist. Der Käfig 11 umgibt daher das Radialgebläse 3 vollständig und begrenzt das Filterelement 4 nach innen (Fig. 3).

Der Käfig 11 dient dabei einerseits als Halterung für das Filterelement 4 und andererseits zum Aufbau einer kontrollierten Strömung durch das Filterelement 4. Durch den Käfig 11 wird nämlich ein gleichmäßiger Druckaufbau vor dem Filterelement 4 begünstigt, der eine gleichmäßigere Durchströmung des Filterelementes 4 bewirkt.

Der Käfig 11 besteht aus einem gelochten Blech- oder Kunststoffabschnitt, der kreisförmig gebogen in einer Nut 15 des Bodenblechs 13 des Gehäuses 2 aufgenommen wird. Die Lochung kann dabei z.B. kreis- oder wabenförmig sein. Durch den so geschaffenen Käfig 11 lässt sich ein Öffnungs/Sperrverhältnis von etwa 25:75% erzielen, welches sich für die gleichmäßigere Durchströmung senkrecht zum Filterelement 4 als vorteilhaft erwiesen hat, wobei auch das Filterelement 4 eine wesentliche Stabilisierung der Geschwindigkeitsverhältnisse auf die gesamte Höhe des Laufrades 16a des Radialgebläses 3 herbeiführt. In der Praxis hat sich ein Verhältnis von 28: 72% als besonders vorteilhaft erwiesen. Durch den Käfig 11 wird eine quergerichtete tangentiale Strömung verhindert oder zumindest verringert und der Reibungswiderstand des Laufrades 16a reduziert, da die Laufrad-Innenseite vergleichsweise glatt ausgebildet ist. Durch die Befestigung in dem Gehäuse 2 innerhalb der Nut 15 kann der Blech- oder Kunststoffabschnitt aus ebenem rechteckigem Material z.B. durch Stanzen hergestellt werden. Die endgültige Form des rechteckigen Materialabschnittes wird durch die in dem Gehäuse 2 vorgesehene Nut 15 herbeigeführt, die dem Blech- oder Kunststoffabschnitt seine Form und gleichzeitig damit die notwendig Stabilität verleiht.

Da das Radialgebläse 3 darüber hinaus nicht unmittelbar mit dem Gehäuse 2 verbunden ist, kann dadurch auch die Übertragung von Körperschall auf das Gehäuse 2 gemindert werden. Dabei liegt die Platte 14 der Zuluftöffnung 12 im Bodenblech 13 des Gehäuses 2 gegenüber, so dass von der Gebäudeaußenseite eintretender Schall von der Platte 14 reflektiert bzw. gestreut werden kann. Dabei hat die Platte 14 insbesondere durch den daran befestigten Stator 16 des Radialgebläses 3 eine erheblich größere Masse und kann daher nur schwer durch Schall in Schwingungen versetzt werden. Die Platte 14 stabilisiert den Käfig 11 zusätzlich, der so neben der Aufnahme in der Nut 15 auch an dem freien Ende in der gewünschten Form gehalten wird.

Um das Gewicht des Stators 16 tragen zu können, weist die Platte 16 die in Fig. 3 dargestellte Konizität auf. Die Platte 14 läuft kegelförmig zur Gebäudeinnenseite zu und ist im Bereich von Befestigungsschrauben 17 mit Verstärkungsstreben 18 versehen.

Wie aus der Fig. 3 ferner deutlich wird, hält der Käfig 11 und die Platte 14 das Laufrad 16a vor der Zuluftöffnung 12 im Bodenblech 13. Die Zuluftöffnung 12 lässt sich durch eine Klappe 19 unmittelbar vor dem Lüftungskanal 20 innerhalb des Gehäuses 2 verschließen. Dadurch kann das Eindringen von abgekühlter Außenluft in das Gehäuse 2 vermieden werden und die in dem Gehäuse befindliche Luft wirkt als wärmedämmendes Polster. Die Klappe 19 ist, wie aus den Fig. 1 bund 2 hervorgeht, als kellenförmig konturierte Platte ausgebildet, die um eine in dem schmalen Ansatz befindliche Achse drehbar ist. Dabei ist in dem Bodenblech 13 eine spiral-förmig verlaufende Führungskante 21 vorgesehen, die mit der Außenkontur 22 der Klappe 19 diese führend zusammenwirkt. In der Verschlussstellung nach Fig. 1 b ist die Außenkontur 22 der Klappe 19 auf einer großen Länge der Führungskante 21 zugeordnet.

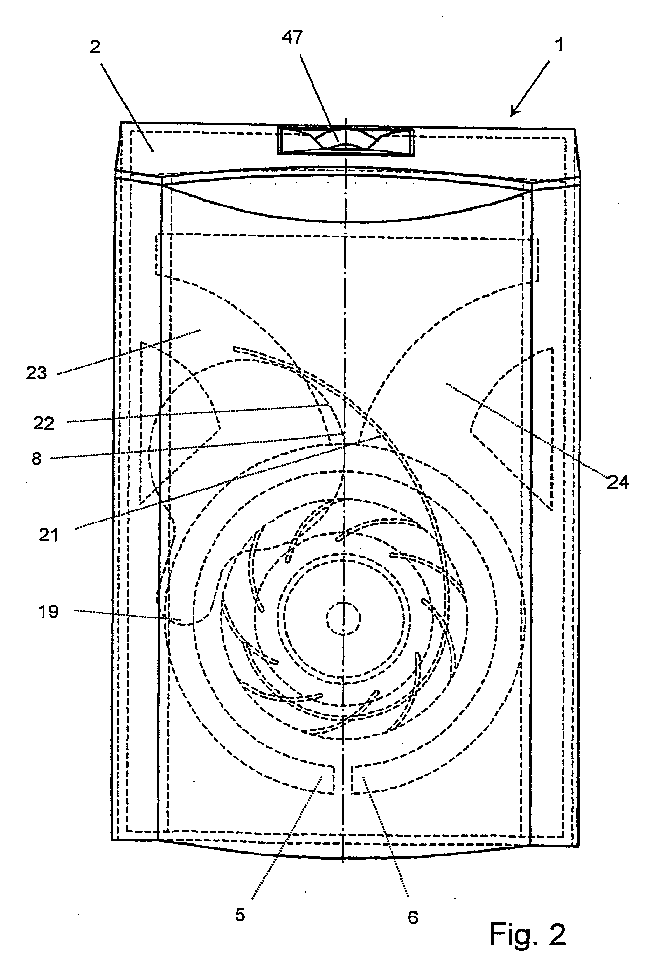

Aus der Fig. 2 sind die innerhalb des Gehäuses 2 durch dieses gebildeten Lüftungskanäle erkennbar. Oberhalb des Radialgebläses 3 verzweigt der im Bodenblech 13 befindliche Lüftungskanal 20 in Lüftungskanäle 23,24. Diese werden im Ausführungsbeispiel durch den im wesentlichen V-förmigen Gegenhalter 8 voneinander getrennt, der durch ein in das Gehäuse 2 einsteckbaren, V-förmig konturierten Dämmstoffkörper gebildet wird. Der Dämmstoffkörper verbessert die schalldämmende Wirkung der Lüftungsvorrichtung 1. Es kann aber alternativ dazu auch vorgesehen werden, dass der Gegenhalter 8, insbesondere im Hinblick auf die einfachere Herstellung und Montage der Lüftungsvorrichtung 1, durch unmittelbar am Gehäuse 2 oder dem Bodenblech 13 vorgesehene Gehäuseabschnitte gebildet wird, die auch die Trennung der Lüftungskanäle 23,24 bewirken.

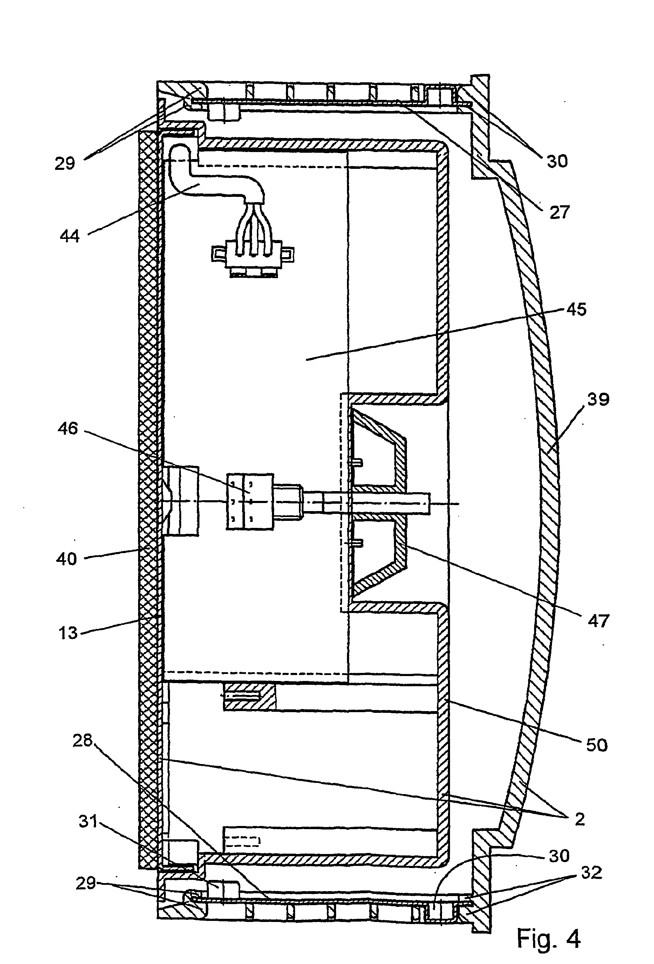

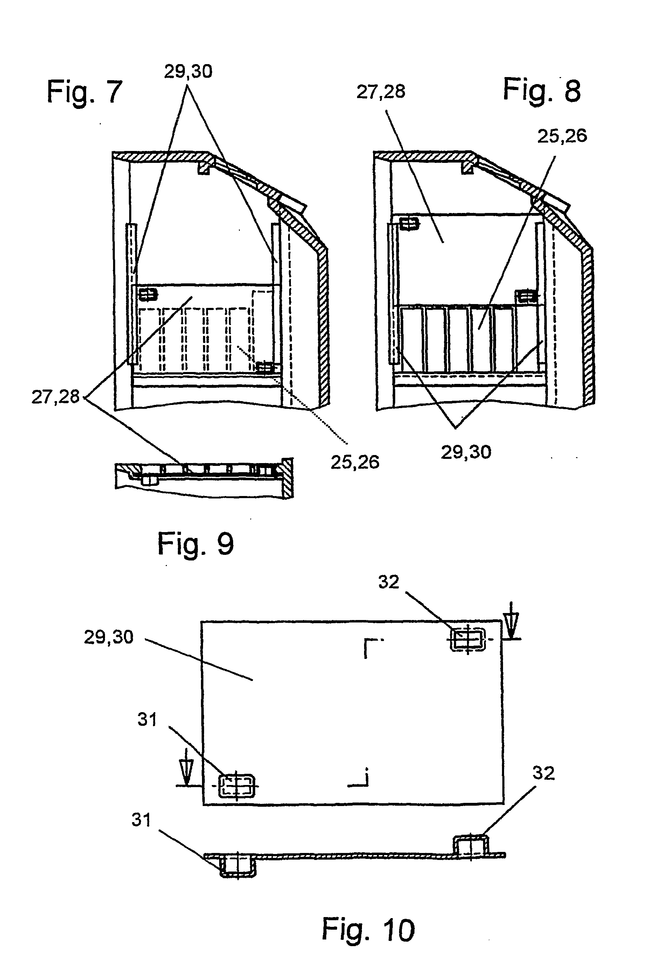

Die Lüftungskanäle 23, 24 münden in seitlichen Luftauslässen 25,26, von denen in Fig. 3 der Luftauslass 25 sichtbar ist. Diese sind über Schieber 27,28 verschließbar, die in dafür vorgesehenen Führungen 29, 30 vertikal verschiebbar gelagert sind, wie aus den Fig. 4, 8, 9 und 10 erkennbar. Die Schieber 27, 28 bestehen dabei im wesentlichen aus der in Fig. 10 dargestellten ebenen Platte 29, an der punktsymmetrisch zum Mittelpunkt der Platte 29 zwei Erhebungen 31, 32 nach vorne und hinten abstehen, an denen die Schieber 27, 28 innerhalb der Führungen 29,30 verschoben werden können. Dadurch kann der Schieber 27 um 180° gedreht auch in der Führung 30 verwendet werden, so dass die Schieber 27 und 28 identisch ausgebildet sein können. Trotzdem sind die Erhebungen 31, 32 jeweils an dem nach vorne weisenden Gehäuseabschnitt für die Bedienperson leicht zugänglich. Die Schieber 27, 28 werden in den Führungen 29, 30 durch eine hier nicht dargestellte leichte Wölbung in jeder Stellung gehalten. Es kann selbstverständlich auch vorgesehen werden, dass zumindest die Endstellungen mittels Rastelementen gesichert werden.

Wie aus der Fig. 5 hervorgeht, ist kein Spiralgehäuse um das Radialgebläse 3 vorgesehen. Vielmehr werden die Seitenwände 33, 34 des Gehäuses 2 dazu verwendet, beidseitig des Radialgebläses 3 Druckkammern 35,36 zu bilden, die mit den Lüftungskanälen 23, 24 verbunden sind. Der Raum innerhalb des Filterelementes 4 bzw. des Käfigs 11 bildet dabei die Druckkammer.

In dem Gehäuse 2 sind femer noch Luftführungen 37, 38 vorgesehen, welche die Druckkammern 35, 36 im Bereich der Lüftungskanäle 23, 24 verengen.

Wie aus der Fig. 3 noch hervorgeht steht das Filterelement 4 über die Platte 14 vor. An der Innenseite des Deckels 39 ist eine hier nicht dargestellte Dämmschicht aufgebracht, die im Bereich des Filterelementes 4 mit einer flachen Mulde versehen ist, in die das Filterelement 4 eintaucht. Dadurch wird das Filterelement 4 zusätzlich in Richtung des Bodenblechs 13 gedrückt und erhält einen formstabilisierenden Halt. Eine besonders bevorzugte Ausgestaltung des Filterelementes 4 sieht vor, dass das Filterelement 4 als Aktivkohlefilter ausgelegt ist, der aus verschäumtem Aktivkohlegranulat besteht, das in einem Sack aus luftdurchlässigem Vlies aufgenommen ist. Der Einsatz von Aktivkohlefiltern ist ebenso wie deren Vorteile im wesentlichen bekannt. Die besondere Ausgestaltung lässt eine Herstellung eines preiswerten aber effektiven Filterelementes 4 zu. Durch das Vlies wird ein Rieselschutz bewirkt, der sich ggf. nach einem Zeitablauf oder durch mechanische Belastung lösende Bestandteile zurückhält. Diese könnten sich ansonsten in dem Gehäuse 2 ansammeln oder in das Laufrad 16a des Radialgebläses 3 gelangen. Gleichzeitig hat das so geformte Filterelement 4 trotz des geringen Druckverlustes zusätzlich eine hohe schalldämmende Wirkung. Daher sind schalldämmende Polster im Bereich der Seitenwände 33, 34 nicht notwendig, was den erforderlichen Bauraum reduziert. In Verbindung mit dem zuvor beschrieben Aktivkohlefilter verhindert der Käfig 11 einen Faltenwurf des Vlieses, der zu unerwünschten Strömungsbeeinflussungen führen würde. Das Vlies legt sich so an den Käfig 11 an und wird dadurch geglättet.

Selbstverständlich ist auch eine Ausgestaltung möglich, bei der das Filterelement 4 in bekannter Weise als Filtervlies ausgelegt ist. Diese Filterelemente sind kostengünstiger als die Aktivkohlefilter und daher einzusetzen, wenn keine Anwendung der Aktivkohlefilter notwendig wird.

Wie aus der Fig. 4 hervorgeht, ist der Deckel 39 leicht gewölbt ausgeführt. Das Bodenblech 13 wird von dem Deckel 39 auch seitlich überdeckt, wobei zur Reduzierung der Eigenschwingungen des Radialgebläses 3 die der Wand des Gebäudes zugeordnete Rückseite mit einem Schalldämmmaterial 40 versehen ist. Der Deckel 39 lässt sich daher nach Montage des Bodenblechs 13 an der Wand über dieses schieben. Zur Montage des Bodenblechs 13 sind dabei schlüssellochförmige Langlöcher 41 vorgesehen, die das Einführen eines verbreiterten Schraubenkopfes gestatten und die nach einem Verschieben des Bodenblechs 13 nach unten im engeren Langlochabschnitt ein Abziehen des Bodenblechs 13 von der Wand verhindern. Dabei ist der das Langloch 41 enthaltene Materialabschnitt bezüglich der Wand geneigt, so dass das Bodenblech 13 beim Verschieben an die Wand angepresst wird.

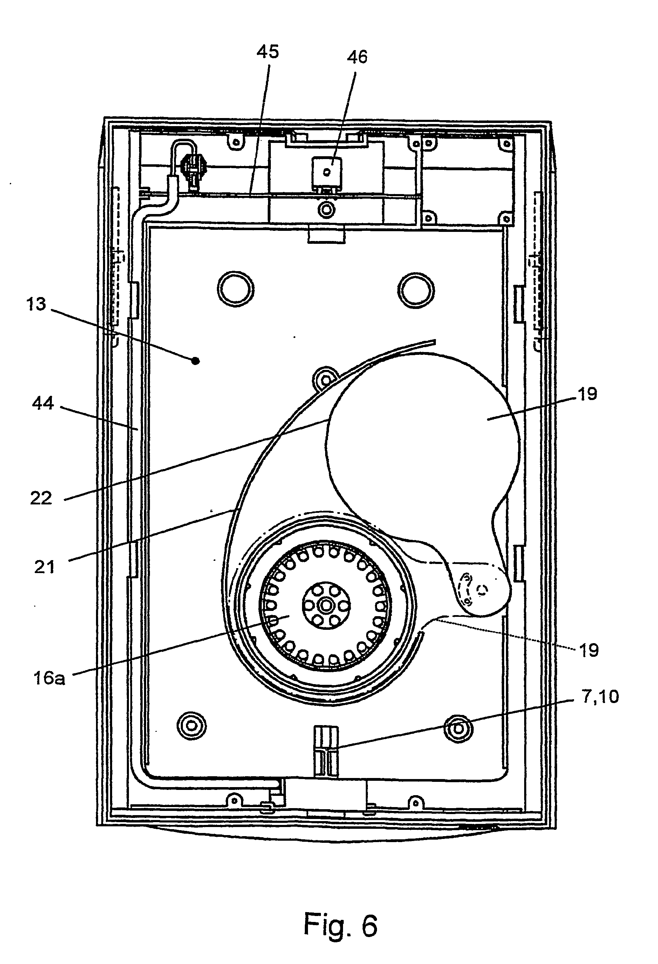

Aus der Fig. 6 ist die Rückseite der Lüftungseinrichtung ohne Bodenblech 13 und Schalldämmmaterial 40 sichtbar. Die Energiezufuhr erfolgt durch eine an der Unterseite des Gehäuses 2 angebrachte Steckverbindung 42, ersichtlich in der Fig. 3. Dieser ist eine Bohrung 43 in dem Deckel 39 zugeordnet, durch die ein Stecker hindurchgeführt werden kann. Dadurch ist eine Demontage des Deckels 39 erst bei abgezogenem Stecker möglich, wenn die Energieversorgung der Lüftungseinrichtung 1 also unterbrochen ist, was für die Sicherheit der z.B. Wartungsarbeiten durchführenden Personen wesentlich ist. Die Energie wird durch ein seitlich verlegtes Kabel 44 in einen oberen Gehäuseabschnitt geleitet, in dem eine Steuerplatine 45 angeordnet ist. Dieser ist ein Potentiometer 46 zur Steuerung der Drehzahl des Radialgebläses sowie zum Ein- bzw. Ausschalten desselben zugeordnet, der mit einem Stellrad 47 eine Öffnung in dem Gehäuse 2 teilweise durchdringt. Wie in Verbindung mit der Fig. 3 deutlich wird, ist das aus durchsichtigem Kunststoff hergestellte Stellrad 47 über eine Beleuchtungseinrichtung 48 in Form einer LED indirekt beleuchtbar. Die Steuerplatine 45 enthält alle notwendigen Bauteile zur Drehzahlregulierung des Radialgebläses 3 sowie ggf. vorhandener elektromotorischer Antriebe für die Klappe 19 oder die Schieber 27, 28.

Wie aus der Fig. 6 in Verbindung mit der Fig. 4 deutlich wird, ist die Steuerplatine 45 durch eine Abdeckung 50 von dem Lüfterinnenraum weitgehend abgetrennt, so das auch bei geöffnetem Gehäuse 2 die Steuerplatine 45 nicht zugänglich ist. Erst nach dem Abnehmen des Bodenblechs 13 und der darauf befestigten Abdeckung 50 kann die Steuerplatine 45 zugänglich sein.

### Bezugszeichenliste

- 1: Lüftungsvorrichtung
- 2: Gehäuse
- 3: Radialgebläse
- 4: Filterelement
- 5: Längsende
- 6: Längsende
- 7': Halter
- 8: Gegenhalter

- 10: H-förmiges Profil
- 11: Käfig
- 12: Zuluftöffnung
- 13: Bodenblech
- 14: Platte
- 15: Nut
- 16: Stator
- 16a: Laufrad
- 17: Befestigungsschrauben
- 18: Verstärkungsstreben
- 19: Klappe
- 20: Lüftungskanal
- 21: Führungskante
- 22: Außenkontur
- 23: Lüftungskanal
- 24: Lüftungskanal
- 25: Luftauslass
- 26: Luftauslass
- 27: Schieber
- 28: Schieber
- 29: Führung
- 30: Führung
- 31: Erhebung
- 32: Erhebung
- 33: Seitenwand
- 34: Seitenwand
- 35: Druckkammer
- 36: Druckkammer
- 37: Luftführung
- 38: Luftführung
- 39: Deckel
- 40: Schalldämmmaterial
- 41: Langlöcher
- 42: Steckverbindung
- 43: Bohrung
- 44: Kabel
- 45: Steuerplatine
- 46: Potentiometer
- 47: Stellrad
- 48: Beleuchtungseinrichtung
- 50: Abdeckung

## Patentansprüche

1. Lüftungsvorrichtung (1) für Räume mit einem Gehäuse (2), welches zumindest einen Luftführungskanal (20; 23, 24) ausbildet und ein in dem Gehäuse (2) angeordnetes Radialgebläse (3) sowie ein Filterelement (4) aufweist, wobei das Filterelement (4) das Radialgebläse (3) ringförmig umgreift,
**dadurch gekennzeichnet,**
**dass** das Filterelement (4) aus einer verformbaren rechteckigen Matte besteht, deren Längsenden (5, 6) in einem Halter (7) aufgenommen ist, und dass dem Halter (7) diametral zu dem Radialgebläse (3) ein Gegenhalter (8) gegenüberliegt.

2. Lüftungsvorrichtung nach Anspruch 1,
**dadurch gekennzeichnet,**
**dass** der Halter (7) als H-förmiges Profil (10) ausgebildet ist und lotrecht unterhalb des Radialgebläses (3) liegt.

3. Lüftungsvorrichtung nach Anspruch 1 oder 2,
**dadurch gekennzeichnet,**
**dass** das Radialgebläse (3) von einem zylindrischen Käfig (11) umgeben ist, an dem das Filterelement (4) außenseitig anliegt.

4. Lüftungsvorrichtung nach Anspruch 3,
**dadurch gekennzeichnet,**
**dass** der Käfig (11) aus einem gelochten Blech- oder Kunststoffabschnitt besteht, der kreisförmig gebogen in einer Nut (15) des Gehäuses (2) aufgenommen wird.

5. Lüftungsvorrichtung nach einem der Ansprüche 3 oder 4,
**dadurch gekennzeichnet,**
**dass** der Käfig (11) koaxial zu einer Zuluftöffnung (12) im Gehäuse (2) verläuft und an seinem freien Ende eine Platte (14) trägt, an der das Radialgebläse (3) befestigt ist.

6. Lüftungsvorrichtung nach einem der Ansprüche 1 bis 5,
**dadurch gekennzeichnet,**
**dass** der Gegenhalter (8) im wesentlichen als V-förmiger Gehäuseabschnitt zwei Luftführungskanäle (23, 24) ausbildet.

7. Lüftungsvorrichtung nach einem der Ansprüche 1 bis 6,
**dadurch gekennzeichnet,**
**dass** der Gegenhalter (8) durch ein in das Gehäuse (2) einsteckbaren V-förmig konturierten Dämmstoffkörper gebildet wird.

8. Lüftungsvorrichtung nach einem der Ansprüche 1 bis 7,
**dadurch gekennzeichnet,**
**dass** das Filterelement (4) als Aktivkohlefilter ausgelegt ist, der aus verschäumtem Aktivkohlegranulat besteht, das in einem Sack aus luftdurchlässigem Vlies aufgenommen ist.

9. Lüftungsvorrichtung nach einem der Ansprüche 1 bis 7,
**dadurch gekennzeichnet,**
**dass** das Filterelement (4) als Filtervlies ausgelegt ist.

## Claims

1. Ventilation device (1) for rooms having a housing (2), which forms at least one air guide duct (20; 23, 24) and has a radial fan (3) and also a filter element (4) arranged in the housing (2), the filter element (4) engaging in an annular fashion around the radial fan (3),
**characterized**
**in that** the filter element (4) consists of a deformable rectangular mat whose longitudinal ends (5, 6) are held in a holder (7), and in that an opposing holder (8) is situated at the diametrically opposite side of the radial fan (3) from the holder (7).

2. Ventilation device according to Claim 1,
**characterized**
**in that** the holder (7) is formed as an H-shaped section (10) and is situated vertically below the radial fan (3).

3. Ventilation device according to Claim 1 or 2,
**characterized**
**in that** the radial fan (3) is surrounded by a cylindrical cage (11), against which the filter element (4) bears at the outer side.

4. Ventilation device according to Claim 3,
**characterized**
**in that** the cage (11) consists of a perforated sheet metal or plastic part, which is held, having been bent into a circular shape, in a groove (15) in the housing (2).

5. Ventilation device according to one of Claims 3 or 4,
**characterized**
**in that** the cage (11) runs coaxially with respect to an air inlet opening (12) in the housing (2) and bears a plate (14) at its free end, the radial fan (3) being fastened to said plate (14).

6. Ventilation device according to one of Claims 1 to 5,
**characterized**
**in that** the opposing holder (8), essentially as a V-shaped housing section, forms two air guide ducts (23, 24).

7. Ventilation device according to one of Claims 1 to 6,
**characterized**
**in that** the opposing holder (8) is formed by an insulating material body which has a V-shaped contour and can be inserted into the housing (2).

8. Ventilation device according to one of Claims 1 to 7,
**characterized**
**in that** the filter element (4) is designed as an active charcoal filter composed of foamed active charcoal granulated material which is held in a sack made from air-permeable non-woven.

9. Ventilation device according to one of Claims 1 to 7,
**characterized**
**in that** the filter element (4) is designed as filter non-woven.

## Revendications

1. Dispositif de ventilation (1) pour un espace, avec un boîtier (2) qui forme au moins un canal (20; 23, 24) de guidage de l'air, et présente un ventilateur radial (3) agencé dans le boîtier (2), de même qu'un organe de filtrage (4), l'organe de filtrage (4) entourant annulairement le ventilateur radial (3),
**caractérisé en ce que**
l'organe de filtrage (4) se compose d'un mat rectangulaire déformable, dont les extrémités longitudinales (5, 6) sont reçues dans un organe de maintien (7), et **en ce qu'**un organe de maintien complémentaire (8) est opposé à l'organe de maintien (7), diamétralement par rapport au ventilateur radial (3).

2. Dispositif de ventilation selon la revendication 1,
**caractérisé en ce que**
l'organe de maintien (7) est réalisé sous la forme d'un profilé en H (10) et se trouve verticalement en dessous du ventilateur radial (3)

3. Dispositif de ventilation selon la revendication 1 ou 2,
**caractérisé en ce que**
le ventilateur radial (3) est entouré par une cage cylindrique (11) sur la face externe de laquelle se trouve l'organe de filtrage (4).

4. Dispositif de ventilation selon la revendication 3,
**caractérisé en ce que**
la cage (11) est constituée d'une section de tôle ou de matière synthétique perforée qui, pliée en forme de cercle, est reçue dans une rainure (15) du boîtier (2).

5. Dispositif de ventilation selon l'une des revendications 3 et 4
**caractérisé en ce que**
la cage (11) s'étend coaxialement à une ouverture de ventilation (12) dans le boîtier (2), et porte à son extrémité libre une plaque (14) à laquelle est fixé le ventilateur radial (3).

6. Dispositif de ventilation selon l'une des revendications 1 à 5
**caractérisé en ce que**
l'organe de maintien complémentaire (8), sensiblement sous la forme d'une section en V du boîtier, forme deux canaux (23, 24) de guidage de l'air.

7. Dispositif de ventilation selon l'une des revendications 1 à 6,
**caractérisé en ce que**
l'organe de maintien complémentaire (8) est formé par un corps en matériau insonorisant, façonné en V, pouvant être introduit dans le boîtier (2).

8. Dispositif de ventilation selon l'une des revendications 1 à 7,
**caractérisé en ce que**
l'organe de filtrage (4) est configuré sous la forme d'un filtre à charbon actif, constitué de granulés de charbon actif expansé, reçus dans un sac en tissu perméable à l'air.

9. Dispositif de ventilation selon l'une des revendications 1 à 7,
**caractérisé en ce que**
l'organe de filtrage (4) est configuré sous la forme d'un tissu filtrant.
